# EUROPEAN PATENT APPLICATION

(11) **EP 4 808 140 A1**
(43) Date of publication of application: **16.09.2026**
(21) Application number: 25163141.2
(22) Date of filing: 12.03.2025
(51) Int. Cl.: H04N 23/73, B60R 1/29, G06V 20/59, H04N 23/56, H04N 23/74

(54) **CAMERA SYSTEM**

(71) Applicant: Harman Becker Automotive Systems, Inc., Novi, MI 48377 (US)
(72) Inventor: ÖLGÜN, Ramazan Ferhat, Novi, MI 48377 (US)
(74) Representative: Westphal, Mussgnug & Partner, Patentanwälte mbB

(57) **Abstract**

Methods and system are herein provided for a camera system. **In** one example, a camera system comprises one or more cameras, one or more light sources, and a computing device comprising one or more processors and a memory, wherein the one or more light sources are configured to be activated for defined time periods at regular intervals to illuminate an environment within a field of view of the one or more cameras, the one or more cameras are configured to capture one or more images during each defined time period when the one or more light sources are activated, and the computing device is configured to receive one or more images captured during a defined time period by means of the one or more cameras, evaluate the one or more images, and if, based on evaluating the one or more images, it is determined that at least one of the one or more images is overexposed, execute a time shift application, wherein executing the time shift application comprises instructing the one or more light sources to delay a subsequent activation by a defined time interval.

## Description

### TECHNICAL FIELD

Embodiments of the subject matter disclosed herein relate to camera systems, and more particularly to camera systems for a vehicle.

### BACKGROUND AND SUMMARY

Vehicles today often include a plurality of camera systems. For example, occupant monitoring systems are configured to monitor one or more occupants of a vehicle in order to, e.g., determine an occupant (e.g., driver) distraction level or an occupant (e.g., driver) attention level. Camera systems (e.g., occupant or driver monitoring systems) can determine whether a driver is becoming drowsy, e.g., if it is determined that the driver closes their eyes at an increased rate or for comparably long periods of time. Further applications for camera systems are, e.g., occupant detection and classification, seat belt detection, life presence detection, manual distraction, etc. Each camera system generally comprises one or more cameras. In many cases, camera systems further include one or more light sources (e.g., infrared light emitting diodes, IR LEDs). Such light sources are generally operated at a specific frequency. That is, a surrounding environment of the one or more cameras of a camera system is illuminated in regular intervals. Images are captured by the one or more cameras during those time intervals, when the one or more light sources are turned on. In this way it may be ensured that images captured by the one or more cameras are well exposed (i.e. not underexposed) and can be evaluated, and the camera system provides reliable results. If one or more light sources of a first camera system and one or more light sources of a second camera system are turned on at the same time, images captured by means of the camera(s) of both camera system may be overexposed and may not be suitable for further evaluation.

There is a need for a camera system that is able to prevent images captured by means of the camera system from being overexposed.

### SUMMARY

A camera system according to embodiments of the present disclosure includes one or more cameras, one or more light sources, and a computing device including one or more processors and a memory, wherein the one or more light sources are configured to be activated for defined time periods at regular intervals to illuminate an environment within a field of view of the one or more cameras, the one or more cameras are configured to capture one or more images during each defined time period when the one or more light sources are activated, and the computing device is configured to receive one or more images captured during a defined time period by means of the one or more cameras, evaluate the one or more images, and if, based on evaluating the one or more images, it is determined that at least one of the one or more images is overexposed, execute a time shift application, wherein executing the time shift application includes instructing the one or more light sources to delay a subsequent activation by a defined time interval.

A method according to embodiments of the present disclosure includes activating one or more light sources of a camera system for defined time periods at regular intervals to illuminate an environment within a field of view of one or more cameras of the camera system, capturing one or more images during each defined time period when the one or more light sources are activated by means of the one or more cameras, evaluating the one or more images, and if, based on evaluating the one or more images, it is determined that at least one of the one or more images is overexposed, executing a time shift application, wherein executing the time shift application includes instructing the one or more light sources to delay a subsequent activation by a defined time interval.

It should be understood that the brief description above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

FIG. 1 schematically illustrates a camera system in a vehicle;
FIG. 2 schematically illustrates turn on times of light sources of a first camera system and a second camera system;
FIG. 3 schematically illustrates a camera system according to embodiments of the present disclosure;
FIG. 4 schematically illustrates turn on times of light sources of a camera system according to embodiments of the present disclosure; and
FIG. 5 shows a flowchart illustrating a method for a camera system according to one or more embodiments of the present disclosure.

### DETAILED DESCRIPTION

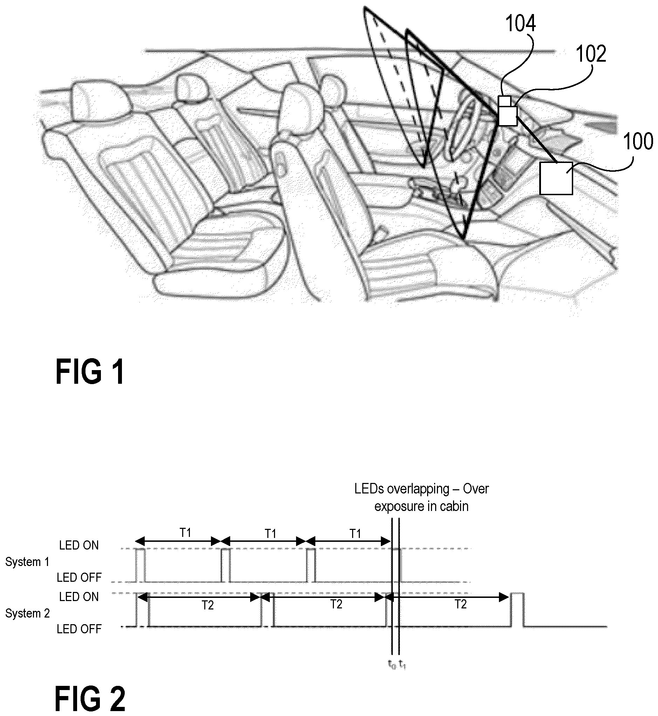

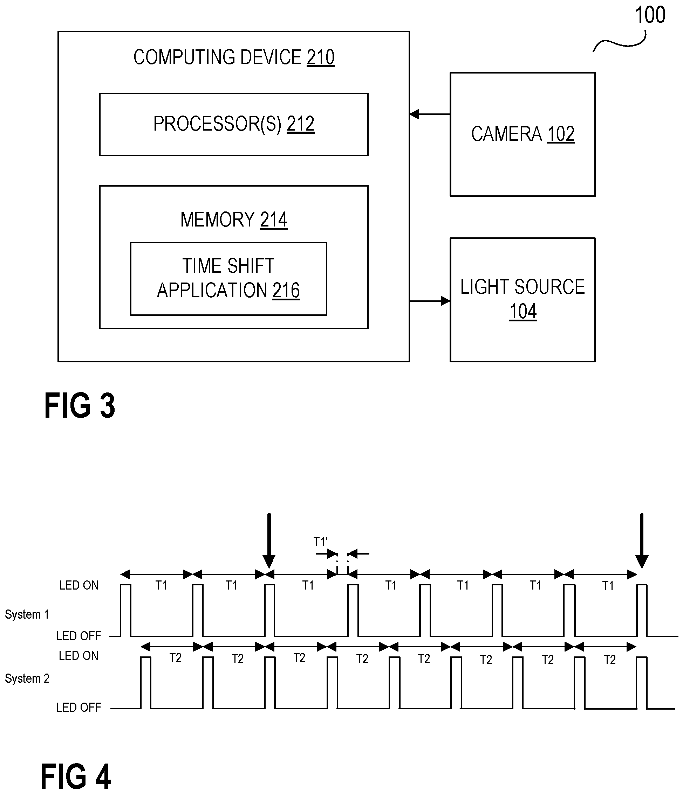

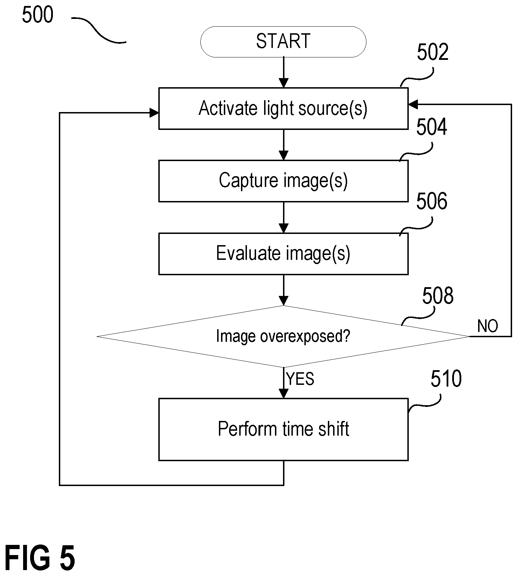

The following description relates to a camera system and related method. The camera system herein disclosed continuously evaluates images captured by means of the camera system. If it is detected that one or more images captured by means of the camera system are overexposed, subsequent activation of one or more cameras of the camera system will be adequately delayed, in order to avoid overexposed images from occurring again or at least to significantly reduce the number of overexposed images occurring in the following. FIG. 1 shows a camera system in a vehicle. FIG. 2 schematically illustrates turn on times of light sources of a first camera system and a second camera system, FIG. 3 schematically illustrates a camera system according to embodiments of the present disclosure, FIG. 4 schematically illustrates turn on times of light sources of a camera system according to embodiments of the present disclosure, and FIG. 5 shows a flowchart illustrating a method for a camera system according to one or more embodiments of the present disclosure.

Vehicles today often include a plurality of camera systems. For example, occupant monitoring systems are configured to monitor one or more occupants of a vehicle in order to, e.g., determine an occupant (e.g., driver) distraction level or an occupant (e.g., driver) attention level. Camera systems (e.g., occupant or driver monitoring systems) can determine whether a driver is becoming drowsy, e.g., if it is determined that the driver closes their eyes at an increased rate or for comparably long periods of time. Further applications for camera systems are, e.g., occupant detection and classification, seat belt detection, life presence detection, manual distraction, etc. Each camera system generally comprises one or more cameras. In many cases, camera systems further include one or more light sources (e.g., infrared light emitting diodes, IR LEDs). Such light sources are generally operated at a specific frequency. That is, a surrounding environment of the one or more cameras of a camera system is illuminated in regular intervals. Images are captured by the one or more cameras during those time intervals, when the one or more light sources are turned on. In this way it may be ensured that images captured by the one or more cameras are well exposed (i.e. not underexposed) and can be evaluated, and the camera system is able to provide reliable results. If one or more light sources of a first camera system and one or more light sources of a second camera system are turned on at the same time, images captured by means of the camera(s) of both camera system may be overexposed and may not be suitable for further evaluation. This may happen, for example, if two individual camera systems (e.g., from different suppliers) are arranged in the same environment. Some camera systems (e.g., camera systems provided by the same supplier) may communicate with each other such that simultaneous activation of the light sources can be avoided. If, however, camera systems are provided by different suppliers, for example, they usually do not communicate with each other, and cannot be aligned in order to prevent overexposed images from occurring. It is noted, however, that the present disclosure is not restricted to camera systems used in vehicles. Generally, more than one camera system may be arranged in any kind of environment such as, e.g., conference rooms.

FIG. 1 schematically illustrates a camera system 100 in a vehicle. The camera system 100 comprises one or more cameras 102 and one or more light sources 104. The one or more light sources 104 are configured to be activated for defined time periods at regular intervals T1 to illuminate an environment within a field of view of the one or more cameras 102. In the example illustrated in FIG. 1, the environment within the field of view of the one or more cameras 102 is a passenger compartment, or a part of a passenger compartment of the vehicle. Referring to FIG. 2, turn on times of light sources of a first camera system (System 1) are schematically illustrated. The one or more cameras 102 are configured to capture one or more images during each defined time period when the one or more light sources 104 are activated. A second camera system (System 2) may be arranged in the vehicle in addition to the first camera system (second camera system not specifically illustrated in Figure 1). The second camera system may have a different function or purpose than the first camera system. For example, the first camera system may be configured to monitor a driver of the vehicle, and the second camera system may be configured to monitor a front passenger of the vehicle (or any other occupant of the vehicle other than the driver). Any other combinations of different camera systems are generally possible.

One or more light sources of the second camera system (System 2) are also configured to be activated for defined time periods at regular intervals T2 to illuminate an environment within a field of view of one or more cameras of the second camera system. The regular time intervals T2 at which the one or more light sources of the second camera system are activated may differ from the regular intervals T1 at which the one or more light sources 104 of the first camera system are activated, as is schematically illustrated in FIG. 2. It is, however, generally also possible that the regular time intervals T2 at which the one or more light sources of the second camera system are activated are identical to the regular intervals T1 at which the one or more light sources 104 of the first camera system are activated. As the two camera systems are individual systems and are not in communication with each other, the first camera system does not know at which points in time the one or more light sources of the second camera system will be activated. If the regular time intervals T2 at which the one or more light sources of the second camera system are activated are identical to the regular intervals T1 at which the one or more light sources 104 of the first camera system are activated, overexposed images will be captured every time the one or more light sources of the first camera system and the one or more light sources of the second camera system are activated. If the regular time intervals T2 at which the one or more light sources of the second camera system are activated differ from the regular intervals T1 at which the one or more light sources 104 of the first camera system are activated, overexposed images may be captured during some, but not all defined time periods during which the one or more light sources of the first camera system are activated, for example. A defined time period during which the one or more light sources of the first camera system are activated may fully or partly overlap with a defined time period during which the one or more light sources of the second camera system are activated. The regular time intervals T1, T2, generally, may have any suitable length. For example, the regular time intervals T1, T2 may have a length of between several microseconds (µs) and one second, or of between several microseconds and two seconds. According to some examples, the regular time intervals T1, T2 may have a length of between 10µs and 500µs, or between 10µs and 100µs. A frequency at which images are to be captured by means of the one or two cameras 102, however, generally depends on the application for which the camera system is used.

The one or more light sources of the camera systems generally have a similar function as a flash in conventional cameras. That is, the one or more light sources illuminate the environment such that it is ensured under all light conditions that the images captured by means of the camera system can be evaluated to carry out the intended function of the camera system (e.g., driver detection may be performed). However, conventional flashes are generally not used in such camera systems. Instead, infrared light emitting diodes, IR LEDs, may be used, to mention just one out of several possible examples. IR LEDs generally have the ability of functioning effectively in various lighting conditions, including darkness and bright sunlight. Its functionality through sunglasses or low ambient light together with the fact that light emitted by IR LEDs is invisible for the human eye are further advantages, among others. The intensity of the one or more light sources of a camera system is generally set such that the resulting images can be reliably evaluated. That is, the images captured by means of a camera system are neither underexposed, nor overexposed, when no other light sources are simultaneously activated in the same environment. If two individual camera systems arranged in the same environment are activated at the same time, however, this may result in overexposed images captured by both of the camera systems, as the environment will be illuminated by the one or more light sources of the first camera system as well as by the one or more light sources of the second camera system at the same time.

In order to reduce the number of time periods during which the one or more light sources of the first camera system are activated that overlap with time periods during which the one or more light sources of the second camera system are activated, or to even entirely avoid any future overlaps, a camera system 100 according to embodiments of the disclosure comprises one or more cameras 102, one or more light sources 104, and a computing device 210 comprising one or more processors 212 and a memory 214 (see, e.g., FIG. 3). The one or more light sources 104 are configured to be activated for defined time periods at regular intervals T1 to illuminate an environment within a field of view of the one or more cameras 102, and the one or more cameras 102 are configured to capture one or more images during each defined time period when the one or more light sources 104 are activated. The computing device 210 is configured to receive one or more images captured during a defined time period by means of the one or more cameras 102, evaluate the one or more images, and, if, based on evaluating the one or more images, it is determined that at least one of the one or more images is overexposed, execute a time shift application 216, wherein executing the time shift application 216 comprises instructing the one or more light sources 104 to delay a subsequent activation by a defined time interval T1'.

According to some embodiments, the one or more light sources 104 may be controlled by computing device 210 directly or by the one or more cameras 102. For example, the one or more light sources 104 may be controlled via camera strobe output (e.g., pulse width modulation, PWM). According to some examples, computing device 210 outputs a synchronization signal, FSYNC, which is received by the one or more cameras 102 and the one or more light sources 104 (directly or via the one or more cameras 102), and which causes the one or more light sources 104 to be activated, and the one or more cameras 102 to capture one or more images. Executing the time shift application 216 in this case may cause the next synchronization signal, FSYNC, to be delayed by the defined time interval T1'.

Computing device 210 may be any kind of device that includes one or more processor(s) 212 such as a system-on-a-chip (SoC). In some embodiments, computing device 210 can be a head unit or other component included in a vehicle system. Generally, computing device 210 may be configured to coordinate the overall operation of camera system 100. The embodiments disclosed herein contemplate any technically-feasible system configured to implement the functionality of camera system 100 via computing device 210. In various embodiments, computing device 210 may be located in various environments including, without limitation, road and/or land vehicle environments such as, e.g., consumer vehicles, commercial vehicles, wheeled drones, and so forth.

Processor(s) 212 may be any technically-feasible form of processing device configured to process data and execute program code. Processor(s) 212 could include, for example and without limitation, a system-on-chip (SoC), a central processing unit (CPU), a graphics processing unit (GPU), an application specific integrated circuit (ASIC), a digital signal processor (DSP), a field programmable gate array (PFGA), and/or the like. Processor(s) 212 may include one or more processing cores. In operation, processor(s) 212 may be a primary processor of the computing device 210, controlling and coordinating operations of other system components. For example, processor(s) 212 may be configured to execute instructions (e.g., methods, algorithms, processes, etc.) stored in memory 214.

Memory 114 stores time shift application 216, and may include a memory module or a collection of memory modules. Memory 214 may be non-transitory memory or other form of non-volatile memory, random access memory (RAM), or any other feasible type of memory storage system. In various embodiments, processor(s) 212 can execute time shift application 216 to instruct the one or more light sources 104 to delay a subsequent activation by a defined time interval T1'. For example, one or more images captured by means of the one or more cameras 102 and received by the computing device 210 may be evaluated by the processor(s) 212 to determine whether one or more images of the one or more images are overexposed. This is an indication that another camera system installed in the same environment activates its one or more light sources at the same time. The computing device 210 may then execute the time shift application 216.

Executing the time shift application 216 comprises instructing the one or more light sources 104 to delay a subsequent activation by a defined time interval T1'. This is schematically illustrated in FIG. 4 for the first camera system (System 1). While the second camera system continues to activate its one or more light sources for defined time periods at regular intervals T2, the first camera system, when one or more overexposed images are detected during a defined period of time, delays the next activation period of its one or more light sources (T1 + T1'), and then continues to activate its one or more light sources 104 for defined time periods at regular intervals T1. That is, a frequency (f1 = 1/T1) at which the one or more light sources of the first camera system are activated after an overexposed image has been detected is the same as before the overexposed image was detected. Only one period during which the one or more light sources of the first camera system are not activated, following a detection of one or more overexposed images, is prolonged by a defined time interval T1'.

The defined time interval T1' may be randomly chosen (e.g., default value), or may be individually determined. According to some examples, if one or more overexposed images are detected during a defined time period for the first time after activation of the camera system 100, the computing device 210 may be configured to choose one default value of one or more default values for the defined time interval T1'. That is, one or more default values may be stored in the camera system 100 (e.g., in memory 214) and may be applied if one or more overexposed images are detected during a defined time period. If one or more overexposed images are detected during a defined time period for the first time after activation of the camera system 100, there is not yet much information available, and individually determining the defined time interval T1' may not yet be possible. If only one default value is stored in the camera system 100, there is a risk that even if subsequent activation of the one or more light sources 104 of the first camera system is delayed by a defined time interval T1' (default value), overexposed images will occur again. Therefore, more than one default value may be stored in the camera system 100 such that, if another overexposed image is detected after activation of the one or more light sources 104 of the first camera system has been delayed once, another default value may be used. According to some examples, the defined time interval T1' is shorter than the regular intervals T1. If the defined time interval T1' has the same length as the regular time interval T1, there is a high probability that overexposed images occur again after activation of the one or more light sources 104 of the first camera system has been delayed. According to some examples, the defined time interval T1' may have a length of several microseconds (µs), e.g., between 1µs and 50µs, or between 1µs and 10µs.

The one or more cameras 102 of the camera system 100 may each capture either one or more images during each defined time period when the one or more light sources 104 are activated. This generally depends on the length of the defined time period as well as on a frequency at which images are captured by means of the one or more cameras 102. According to some embodiments of the present disclosure, if the one or more cameras 102 are each configured to capture two or more images during each defined time period when the one or more light sources 104 are activated, the computing device 210 may be further configured to determine the number of overexposed images captured at different points in time during each defined time period. The computing device 210 may be further configured to choose a default value of two or more default values for the defined time interval T1' based on a number of overexposed images captured at different points in time during each defined time period, and based on a length of a time interval between a point in time at which a first overexposed image occurs during a time period and an end of the respective time period.

For example, each defined time period during which the one or more light sources 104 of the first camera system 100 are activated may have a defined length (e.g., several milliseconds). Similarly, each defined time period during which the one or more light sources of the second camera system are activated may have a defined length (e.g., several milliseconds). The defined time periods may overlap fully or only partly. That is, if each camera 102 of the one or more cameras 102 of the first camera system 100 captures more than one image during each defined time period, and if all images captured at different points in time during a defined time period are overexposed, this is an indication that the defined time periods during which the one or more light sources 104 of the first camera system 100 and the one or more light sources of the second camera system are activated overlap fully. If each camera 102 of the one or more cameras 102 of the first camera system 100 captures more than one image during each defined time period, and if only some images captured at different points in time during a defined time period are overexposed, this is an indication that the defined time periods during which the one or more light sources 104 of the first camera system 100 and the one or more light sources of the second camera system are activated overlap only partly. If only some of the images captured at different points in time during a defined time period are overexposed, a default value may be chosen such that the defined time interval T1' is shorter, as compared to the case where all of the images captured at different points in time during a defined time period are overexposed, for example.

According to some examples, the computing device 210 may be configured to choose the default value such that the defined time interval T1' is greater than the length of the time interval between the point in time at which the first overexposed image occurs during a time period and the end of the respective time period. In this way, any future overlaps may be more effectively prevented.

If one or more overexposed images are detected during a defined time period a second time or more than two times after activation of the camera system 100, it is generally possible that, again, a default value is used for the defined time interval T1'. However, according to some embodiments of the present disclosure, if one or more overexposed images are detected during a defined time period a second time or more than two times after activation of the camera system 100, the computing device 210 may instead be configured to individually determine an appropriate value for the defined time interval T1'. If overexposed images occur a second or even further time after activation of the camera system 100, more information is generally available which can be used to individually determine an appropriate value for the defined time interval T1'. For example, conclusions may be drawn as to a frequency (f2 = 1/T2) at which the one or more light sources of a second camera system are activated, as well as to a length of the time periods during which the one or more light sources of the second camera system are activated.

According to some embodiments of the present disclosure, the computing device 210 may be configured to determine a number of successive defined time periods during which no overexposed images have been detected, between two defined time periods during which at least one overexposed image has been detected, respectively, and take into account the number of successive defined time periods during which no overexposed images have been detected when determining an appropriate value for the defined time interval T1'.

In the example illustrated in FIG. 4, there are four successive time periods during which no overexposed images have been detected between two successive defined time periods during which at least one overexposed image has been detected (indicated by means of vertical arrows in FIG. 4). The computing device 210 may take this information into consideration when determining an appropriate value for the defined time interval T1' for the next shift. Any suitable algorithm may be used when determining an appropriate value for the defined time interval T1'.

According to some embodiments of the present disclosure, if the one or more cameras 102 are each configured to capture two or more images during each defined time period when the one or more light sources 104 are activated, the computing device 210 may be further configured to determine the number of overexposed images captured at different points in time during each defined time period, and determine an appropriate value for the defined time interval T1' based on a number of overexposed images captured at different points in time during each defined time period, and based on a length of a time interval between a point in time at which a first overexposed image occurs during a time period and an end of the respective time period. The defined time periods may overlap fully or only partly. That is, if each camera 102 of the one or more cameras 102 of the first camera system 100 captures more than one image during each defined time period, and if all images captured at different points in time during a defined time period are overexposed, this is an indication that the defined time periods during which the one or more light sources 104 of the first camera system 100 and the one or more light sources of the second camera system are activated overlap fully. If each camera 102 of the one or more cameras 102 of the first camera system 100 captures more than one image during each defined time period, and if only some images captured at different points in time during a defined time period are overexposed, this is an indication that the defined time periods during which the one or more light sources 104 of the first camera system 100 and the one or more light sources of the second camera system are activated overlap only partly. This may be taken into consideration when individually determining the defined time interval T1'.

According to some embodiments, the computing device 210 may be configured to determine an appropriate value for the defined time interval T1' such that the defined time interval T1' is greater than the length of the time interval between the point in time at which the first overexposed image occurs during a time period and the end of the respective time period. In this way, any future overlaps may be more effectively prevented.

Turning now to FIG. 5, a flowchart illustrating a method 500 for a camera system, such as camera system 100 of FIG. 3, is shown. The method 500 may be executed by one or more processors of the camera system, such as processor(s) 212, based on instructions stored in memory, such as memory 214.

At 502, method 500 includes activating one or more light sources 104 of a camera system 100 for defined time periods at regular intervals T1 to illuminate an environment within a field of view of one or more cameras 102 of the camera system 100. At 504, method 500 includes capturing one or more images during each defined time period when the one or more light sources 104 are activated by means of the one or more cameras 102. The one or more images are then evaluated at 506. If, at 508, based on evaluating the one or more images, it is determined that at least one of the one or more images is overexposed, a time shift application 216 is executed at 510, wherein executing the time shift application 216 comprises instructing the one or more light sources 104 to delay a subsequent activation by a defined time interval T1'. If no overexposed images are detected, no time shift will be performed. The method 500 then returns to 502 for the next activation of the light source(s) 104.

As mentioned above, a vehicle may comprise the camera system 100 according to any of the embodiments described above. According to some embodiments, the camera system 100 may be an occupant monitoring system, OMS, a driver monitoring system, DMS, an occupant classification system, a driver classification system, a seat belt detection system, or a life presence detection system. It is noted, however, that an occupant detection system may be used, e.g., for tasks such as seat belt detection, detection of feet on a dashboard, child presence detection, etc.

The camera system and method have been described above for an environment comprising two camera systems (i.e. first camera system and second camera system). It is generally possible, that more than two camera systems be arranged in an environment. That is, activation times of the one or more light sources of the first camera system may potentially overlap with activation times of one or more light sources of more than one further camera system. This, however, has no influence on the general function of the camera system and method described herein.

By entirely avoiding or at least reducing the number of overlaps between activation times of light sources of the camera systems, the image quality of the images of all systems, not only the system performing the time shift, will be increased. In this way, accuracy of all concerned camera systems will be increased. Further, if the light source(s) of two or even more camera systems are activated simultaneously, it may happen that a maximum value of admissible brightness within the environment is exceeded. That is, a person that is present in the environment (e.g., driver of a vehicle) may be blinded momentarily. This may lead to eye damage. Even further, if the two or more camera systems are arranged, e.g., in a passenger cabin of a vehicle, and the driver of the vehicle is momentarily blinded, this also constitutes a safety hazard, and may lead to driver distraction and potentially to (hazardous) accidents. Such risks can be significantly reduced by significantly reducing or even avoiding overlaps between activation times of light sources of the different camera systems.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. A camera system (100), comprising:
one or more cameras (102);
one or more light sources (104); and
a computing device (210) comprising one or more processors (212) and a memory (214), wherein
the one or more light sources (104) are configured to be activated for defined time periods at regular intervals (T1) to illuminate an environment within a field of view of the one or more cameras (102);
the one or more cameras (102) are configured to capture one or more images during each defined time period when the one or more light sources (104) are activated; and
the computing device (210) is configured to:
receive one or more images captured during a defined time period by means of the one or more cameras (102);
evaluate the one or more images; and
if, based on evaluating the one or more images, it is determined that at least one of the one or more images is overexposed, execute a time shift application (216), wherein executing the time shift application (216) comprises instructing the one or more light sources (104) to delay a subsequent activation by a defined time interval (T1').

2. The camera system (100) of claim 1, wherein, if one or more overexposed images are detected during a defined time period for the first time after activation of the camera system (100), the computing device (210) is configured to choose one default value of one or more default values for the defined time interval (T1').

3. The camera system (100) of claim 2, wherein the defined time interval (T1') is shorter than the regular intervals (T1).

4. The camera system (100) of claim 2 or 3, wherein, if the one or more cameras (102) are each configured to capture two or more images during each defined time period when the one or more light sources (104) are activated,
the computing device (210) is further configured to determine the number of overexposed images captured at different points in time during each defined time period, and
the computing device (210) is configured to choose a default value of two or more default values for the defined time interval (T1') based on a number of overexposed images captured at different points in time during each defined time period, and based on a length of a time interval between a point in time at which a first overexposed image occurs during a time period and an end of the respective time period.

5. The camera system of claim 4, wherein the computing device (210) is configured to choose the default value such that the defined time interval (T1') is greater than the length of the time interval between the point in time at which the first overexposed image occurs during a time period and the end of the respective time period.

6. The camera system (100) of any of claims 1 to 5, wherein, if one or more overexposed images are detected during a defined time period a second time or more than two times after activation of the camera system (100), the computing device (210) is configured to individually determine an appropriate value for the defined time interval (T1').

7. The camera system (100) of claim 6, wherein the computing device (210) is configured to
determine a number of successive defined time periods during which no overexposed images have been detected, between two defined time periods during which at least one overexposed image has been detected, respectively, and
take into account the number of successive defined time periods during which no overexposed images have been detected when determining an appropriate value for the defined time interval (T1').

8. The camera system (100) of claim 6 or 7, wherein, if the one or more cameras (102) are each configured to capture two or more images during each defined time period when the one or more light sources (104) are activated, the computing device (210) is further configured to
determine the number of overexposed images captured at different points in time during each defined time period, and
determine an appropriate value for the defined time interval (T1') based on a number of overexposed images captured at different points in time during each defined time period, and based on a length of a time interval between a point in time at which a first overexposed image occurs during a time period and an end of the respective time period.

9. The camera system (100) of claim 8, wherein the computing device (210) is configured to determine an appropriate value for the defined time interval (T1') such that the defined time interval (T1') is greater than the length of the time interval between the point in time at which the first overexposed image occurs during a time period and the end of the respective time period.

10. A method, comprising:
activating one or more light sources (104) of a camera system (100) for defined time periods at regular intervals (T1) to illuminate an environment within a field of view of one or more cameras (102) of the camera system (100);
capturing one or more images during each defined time period when the one or more light sources (104) are activated by means of the one or more cameras (102);
evaluating the one or more images; and
if, based on evaluating the one or more images, it is determined that at least one of the one or more images is overexposed, executing a time shift application (216), wherein executing the time shift application (216) comprises instructing the one or more light sources (104) to delay a subsequent activation by a defined time interval (T1').

11. A vehicle comprising the camera system (100) of any of claims 1 to 9.

12. The vehicle of claim 11, wherein the camera system (100) is an occupant monitoring system, OMS, a driver monitoring system, DMS, an occupant classification system, a driver classification system, a seat belt detection system, or a life presence detection system.
